Europäisches Patentamt

European Patent Office

Office européen des brevets

(11) Veröffentlichungsnummer: **0 471 260 A2**

# EUROPÄISCHE PATENTANMELDUNG

(21) Anmeldenummer: **91113090.4**

(22) Anmeldetag: **03.08.91**

(51) Int. Cl.5: **C08G 18/34**, C08G 18/66,
//(C08G18/34,101:00)

(30) Priorität: **16.08.90 DE 4025817**

(43) Veröffentlichungstag der Anmeldung:
**19.02.92 Patentblatt 92/08**

(84) Benannte Vertragsstaaten:
**AT BE CH DE ES FR GB IT LI NL**

(71) Anmelder: **BAYER AG**

**W-5090 Leverkusen 1 Bayerwerk(DE)**

(72) Erfinder: **Brock, Martin, Dr.**
**Ulmenweg 3**
**W-6823 Neulussheim(DE)**

(54) **Verfahren zur Herstellung von offenzelligen Polyurethan-Weichschaumstoffen und deren Verwendung als Polstermaterial.**

(57) Offenzellige Polyurethan-Weichschaumstoffe werden durch Umsetzung von

a) Polyisocyanaten mit

b) mindestens zwei gegenüber Isocyanaten aktive Wasserstoffatome aufweisenden Polyethern vom Molekulargewicht 400 bis 10.000 in Gegenwart von

c) Wasser und

d) 0,01 bis 1,0 Gew.-% (bezogen auf b)) einer Säure aus der Reihe Benzoesäure, Salicylsäure, Terephthalsäure, Phthalsäure, Malonsäure, Maleinsäure, Bernsteinsäure, Adipinsäure und polymerer Säuren mit einem Molekulargewicht < 600 oder deren Alkalimetallsalze, gegebenenfalls in Gegenwart von

e) Verbindungen mit mindestens zwei gegenüber Isocyanaten reaktionsfähigen Wasserstoffatomen mit einem Molekulargewicht von 32 bis 399 und

f) an sich bekannten Hilfs- und weiteren Zusatzmitteln,

hergestellt und als Polstermaterial verwendet.

EP 0 471 260 A2

Die Erfindung betrifft ein Verfahren zur Herstellung weicher Polyurethan-Schaumstoffe, vorzugsweise heißhärtender Formschaumstoffe. Weiche Polyurethan-Schaumstoffe werden zur Zeit in der Regel unter Mitverwendung von physikalisch wirkenden Treibmitteln, wie FCKWs hergestellt. Unter ökologischen Gesichtspunkten ist es wünschenswert, auf den Einsatz von FCKWs zu verzichten.

Ziel der Erfindung war, eine neue Möglichkeit aufzufinden, die es erlaubt, ohne unerwünschte FCKW-Treibmittel weiche Polyurethan-Schaumstoffe herzustellen, die den Praxisanforderungen genügen.

Bekannte Verfahren wie z.B. die Verwendung zweier verschieden-polarer Polyester (DE-OS 2 211 194; Nachteil: aufwendige Verfahrenstechnik und Lagerhaltung) oder der Einsatz von Polyacrylaten mit einem Molekulargewicht > 1500 (EP-A 358 282; Nachteil: ungünstige Kosten bei definierten Polymerstrukturen) konnten bislang keinen Eingang in die Praxis finden.

Gemäß vorliegender Erfindung werden spezielle Carbonsäuren bei der Herstellung von weichen Polyurethan-Schaumstoffen mitverwendet. Auch die Derivate, die sich aus diesen Carbonsäuren durch Salzbildung ableiten, z.B. die Alkalimetallsalze, sind erfindungsgemäß mitumfaßt.

Ein gemeinsames Charakteristikum dieser erfindungsgemäß mitzuverwendenden Carbonsäuren ist, daß ihr Löslichkeitsprodukt in Wasser stark vom pH-Wert abhängt. Vorzugsweise ist eine geringe Löslichkeit bei pH-Werten ≤ 7 und eine gute Löslichkeit bei pH-Werten > 8 gegeben.

Durch die Mitverwendung dieser Carbonsäuren gelingt es, die Stauchhärte der Schaumstoffe deutlich zu reduzieren (vgl. Beispiele). Erfindungsgemäß werden die genannten Carbonsäuren in der Regel in einer Menge von 0,01-1,0, bevorzugt von 0,01 bis 0,5 Gewichtsteilen, bezogen auf 100 Gewichtsteile Polyetherkomponente b), eingesetzt. Ihre Mitverwendung erfolgt in der Regel derart, daß sie entweder im Wasser oder Polyether gelöst bzw. dispergiert werden.

Gegenstand der Erfindung ist ein Verfahren zur Herstellung von offenzelligen Polyurethan-Weichschaumstoffen durch Umsetzung von

a) Polyisocyanaten mit

b) mindestens zwei gegenüber Isocyanaten aktive Wasserstoffatome aufweisenden Polyethern vom Molekulargewicht 400 bis 10.000 in Gegenwart von

c) Wasser und

d) Zusatzstoffen, gegebenenfalls in Gegenwart von

e) Verbindungen mit mindestens zwei gegenüber Isocyanaten reaktionsfähigen Wasserstoffatomen mit einem Molekulargewicht von 32 bis 399 und

f) an sich bekannten Hilfs- und weiteren Zusatzmitteln,

dadurch gekennzeichnet, daß als Zusatzstoffe d) 0,01 bis 1,0 Gew.-% (bezogen auf b)) einer Säure aus der Reihe Berzoesäure, Salicylsäure, Terephthalsäure, Phthalsäure, Malonsäure, Maleinsäure, Bernsteinsäure, Adipinsäure und polymerer Säuren mit einem Molekulargewicht < 600 oder deren Alkalimetallsalzen mitverwendet werden.

Die Herstellung von heißhärtenden Weichformschaumstoffen ist erfindungsgemäß bevorzugt. Dabei werden oft zwei- oder vierwertige Organo-Metallverbindungen, vorzugsweise Zinn(II)-Salze höherer Carbonsäuren, als Katalysatoren eingesetzt.

Die Erfindung betrifft auch die Verwendung der so hergestellten Polyurethan-Weichschaumstoffe als Sitz-, Lehnen- und Kopf-Polstermaterial.

Für die Durchführung des erfindungsgemäßen Verfahrens werden verwendet:

a) Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden, beispielsweise solche der Formel

$$Q(NCO)_n,$$

in der

n = 2 bis 5, vorzugsweise 2 und 3, und

Q = einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 10, C-Atomen, einen aromatischen Kohlenwasserstoffrest mit 6 bis 15, vorzugsweise 6 bis 13, C-Atomen bedeuten, z.B. solche Polyisocyanate, wie sie in der DE-OS 2 832 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"). Möglich ist auch die Verwendung von monomeren und polymeren und prepolymerisierten Diphenylmethandiisocyanaten bzw. deren Abmischung mit TDI.

b) Ausgangskomponenten sind ferner mindestens zwei aktive Wasserstoffatome, vorzugsweise Hydroxylgruppen aufweisende Polyether, in der Regel auf Basis von Propylenoxid oder Propylenoxid/Ethylenoxid-Gemischen, mit einem Molekulargewicht in der Regel von 400 bis 10.000. Diese Polyether können anteilig noch andere Alkylenoxidreste enthalten. Es handelt sich hierbei um an sich bekannte, höhermolekulare Polyether.

c) Als Treibmittel wird Wasser, in der Regel in einer Menge von 0,5 bis 10 Gew.-Tln., bezogen auf 100 Gew.- Tle. der Komponente b), verwendet.

d) Erfindungsgemäß werden als Zusatzstoffe 0,01 bis 1,0 Gew.-%, vorzugsweise 0,01-0,5 Gew.-% (bezogen auf b) einer Säure aus der Reihe Benzoesäure, Salicylsäure, Terephthalsäure, Phthalsäure, Malonsäure, Maleinsäure, Bemsteinsäure, Adipinsäure und polymerer Säuren wie Polyacrylsäure mit einem Molekulargewicht < 600 oder deren Alkalimetallsalzen mitverwendet.

e) Gegebenenfalls kommen als Ausgangskomponenten Verbindungen mit mindestens zwei gegenüber Isocyanaten reaktionsfähigen Wasserstoffatomen und einem Molekulargewicht von 32 bis 399 in Frage. Man versteht hierunter Hydroxylgruppen und/oder Aminogruppen und/oder Thiolgruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 bis 20 beschrieben.

f) Gegebenenfalls werden Hilfs- und weitere Zusatzmittel mitverwendet, wie

1. an sich bekannte organische Treibmittel,

2. oberflächenaktive Zusatzstoffe wie Emulgatoren und Schaumstabilisatoren,

3. Katalysatoren, wie sie an sich bekannt sind, vorzugsweise organische Sn(II)- und/oder Sn(IV)-Verbindungen, insbesondere Sn(II)-Salze höherer Carbonsäuren,

4. Reaktionsverzögerer, Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Diese Umsetzung kann vorzugsweise in geschlossenen Formen erfolgen. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205, beschrieben.

Die nach der Erfindung erhältlichen Polyurethan-Weichschaumstoffe finden vorzugsweise als Sitz-, Lehnen- oder Kopf-Polstermaterial Anwendung.

Ausführungsbeispiele

| Polyether: | Glyzerin-gestarteter trifunktioneller, langkettiger PO/EO-Polyether (ca 10% EO, OHZ 50, Molekulargewicht ca 3.900) |
| Schaum-Stabilisator: | OS 32 (Handelsprodukt der Bayer AG) |
| Katalysator 1: | Bis-N,N'-dimethylamino-diethylether (70 %ig in Dipropylenglykol) |
| Katalysator 2: | Zinn(II)-octoat |
| Additiv: | Natrium-Benzoat |
| T 80: | Toluylendiisocyanat, Gemisch aus 2,4- und 2,6-Isomeren im Gewichtsverhältnis 80:20 %. |

Alle Komponenten werden intensiv vermischt und in einer geschlossenen Form (22 x 22 x 7 cm) verschäumt. Einzelheiten über die angewandten Rezepturen und physikalischen Daten der erhaltenen Weichformschaumstoffe gibt die Tabelle wieder.

**Tabelle**

| Beispiel | 1 (Vergl.) | 2 | 3 | 4 | 5 |
|---|---|---|---|---|---|
| Polyether *) | 100 | 100 | 100 | 100 | 100 |
| Wasser*) | 3,5 | 3,5 | 3,5 | 3,5 | 3,5 |
| Stabilisator*) | 1,0 | 1,0 | 1,0 | 1,0 | 1,0 |
| Katalysator 1*) | 0,15 | 0,15 | 0,15 | 0,15 | 0,15 |
| Katalysator 2* | 0,1 | 0,1 | 0,1 | 0,1 | 0,1 |
| Additiv*) | - | 0,02 | 0,04 | 0,06 | 0,08 |
| T 80**) | 100 | 100 | 100 | 100 | 100 |
| Rohdichte (kg/m³) | 32 | 31,5 | 32 | 32,5 | 32 |
| Stauchhärte (kPa) 40 % Kompression | 3,4 | 3,2 | 2,9 | 2,7 | 2,5 |

*) Gew.-Tle.
**) Menge gemäß Kennzahl

**Patentansprüche**

4

1. Verfahren zur Herstellung von offenzelligen Polyurethan-Weichschaumstoffen durch Umsetzung von
   a) Polyisocyanaten mit
   b) mindestens zwei gegenüber Isocyanaten aktive Wasserstoffatome aufweisenden Polyethern vom Molekulargewicht 400 bis 10.000 in Gegenwart von
   c) Wasser und
   d) Zusatzstoffen, gegebenenfalls in Gegenwart von
   e) Verbindungen mit mindestens zwei gegenüber Isocyanaten reaktionsfähigen Wasserstoffatomen mit einem Molekulargewicht von 32 bis 399 und
   f) an sich bekannten Hilfs- und weiteren Zusatzmitteln,
   dadurch gekennzeichnet, daß als Zusatzstoffe d) 0,01 bis 1,0 Gew.-% (bezogen auf b)) einer Säure aus der Reihe Benzoesäure, Salicylsäure, Terephthalsäure, Phthalsäure, Malonsäure, Maleinsäure, Bernsteinsäure, Adipinsäure und polymerer Säuren mit einem Molekulargewicht < 600 oder deren Alkalimetallsalzen mitverwendet werden.

2. Verfahren gemäß Anspruch 1, dadurch gekennzeichnet, däß heißhärtende Weichformschaumstoffe hergestellt werden.

3. Verfahren nach Anspruch 2, dadurch gekennzeichnet, daß für die Herstellung der heißhärtenden Weichformschaumstoffe zwei- oder vierwertige Organo-Metallverbindungen, vorzugsweise Zinn(II)-Salze höherer Carbonsäuren, als Katalysatoren verwendet werden.

4. Verwendung der Polyurethan-Weichschaumstoffe gemäß Anspruch 1 bis 3 als Sitz-, Lehnen- und Kopf-Polstermaterial.